# FASCICULE DE BREVET EUROPEEN

(11) **EP 2 533 623 B1**
(45) Date de publication et mention de la délivrance du brevet: **13.07.2016**
(21) Numéro de dépôt: 11707450.0
(22) Date de dépôt: 02.02.2011
(51) Int. Cl.: A01C 5/02

(54) **DISPOSITIF DE PLANTOIR**
PFLANZVORRICHTUNG
PLANTER DEVICE

(30) Priorité: 01.06.2010 FR 1054253; 11.02.2010 FR 1050967
(43) Date de publication de la demande: 19.12.2012
(73) Titulaire: Clavel, Benjamin Yvan, 34390 Mons La Trivalle (FR)
(72) Inventeur: CLAVEL, Benjamin, F-34390 Mons La Trivalle (FR)
(74) Mandataire: Rhein, Alain
(86) Numéro de dépôt international: PCT/FR2011/050209
(87) Numéro de publication internationale: WO 2011/098709

(56) Documents cités:
- WO-A1-01/54482
- WO-A2-2007/014441
- DE-U1-202008 002 024
- DE-U1-202008 010 993
- US-A1- 2007 138 816

## Description

La présente invention a pour objet un dispositif de plantoir destiné à être utilisé notamment, mais non limitativement, pour planter des plants de vigne.

Planter un plant consiste en une opération délicate, puisqu'il faut creuser un trou et y introduire le plant, sans endommager les racines et/ou le greffon. L'inconvénient est que le trou doit être suffisamment grand pour pouvoir contenir le plant, mais aussi pour que ce dernier puisse y être introduit sans risque pour les racines.

On connaît ainsi des dispositifs de plantoir, notamment ceux décrits dans les documents DE 20 2008 002024 et US 2007/138816, destinés à la réalisation d'un trou par écartement de la terre en vue d'y introduire ultérieurement un plant, mais qui ne permettent pas de résoudre le problème poser précédemment.

On connaît également, par le document DE 20 2008 010993, un outil conçu apte à la réalisation de trous dans le sol par enlèvement de terre. Son extrémité active est constituée du rapprochement de deux éléments pour former un corps tubulaire, lequel fonctionne à la manière d'un emporte pièce.

Enfin, on connaît par le document WO 2007/014441, un dispositif de plantoir, qui comprend un tube muni d'une extrémité conformée en pointe et susceptible de s'ouvrir, tandis que l'autre extrémité est munie de poignées d'actionnement. En pratique après réalisation du trou, le plant est engagé dans le tube en sorte qu'il descende jusque dans le trou. L'inconvénient d'un tel dispositif est de ne pas permettre à coup sûr de libérer le plant, lequel peut par exemple rester coincer dans le tube.

On connaît d'autres méthodes qui facilitent cette opération, et notamment celle qui consiste à enfermer chaque plant dans un petit conteneur biodégradable, puis à creuser un trou dans la terre et à y introduire ledit conteneur sans risque de détérioration du plant.

Cette méthode est toutefois coûteuse puisqu'elle nécessite un conteneur pour chaque plant, et n'exonère pas de la réalisation d'un trou.

La présente invention a pour but de proposer un dispositif de plantoir permettant de créer le trou juste nécessaire à l'introduction du plant, et sans aucun risque pour ce dernier.

Le dispositif de plantoir selon l'invention comporte un corps dont au moins une partie est tubulaire et est destinée à contenir le plant à planter, constitué du rapprochement de deux éléments allongés présentant, au niveau de ladite partie tubulaire, une section transversale en U, et dont une extrémité, qui est également celle de ladite partie tubulaire, est fermée et conformée en une pointe, tandis que l'autre extrémité est portée par un mécanisme d'actionnement desdits éléments en éloignement et en rapprochement l'un de l'autre, tandis que des poignées sont conçues aptes à permettre d'une part le maintien dudit dispositif afin d'enfoncer ladite partie tubulaire par sa pointe dans le sol, et d'autre part de manoeuvrer ledit mécanisme en ouverture pour permettre l'introduction du plant dans ledit corps tubulaire, ou pour libérer ledit plant dans la terre après enfouissement de ladite partie tubulaire, et il se caractérise essentiellement en ce que ledit mécanisme d'actionnement comporte un bâti en forme de U à chacune des branches duquel est solidarisée, du côté intérieur desdites branches, un élément dudit corps au travers d'une paire de bielles, en sorte de former un parallélogramme déformable, les poignées étant articulées sur ledit bâti, tandis que chacune d'elles est reliée à une bielle de chacune desdites paires de bielles, de manière que l'actionnement desdites poignées, agissent sur ledit parallélogramme déformable.

Selon une caractéristique additionnelle du dispositif de plantoir selon l'invention, le mécanisme d'actionnement est agencé en sorte que l'écartement des deux éléments constituant le corps soit réalisé par un mouvement de rapprochement des poignées, et inversement.

Selon une autre caractéristique additionnelle du dispositif de plantoir selon l'invention, la partie tubulaire du corps est de section ronde, tandis que la pointe est de forme conique.

Selon une autre caractéristique additionnelle du dispositif de plantoir selon l'invention, le mécanisme d'actionnement est associé à un moyen moteur.

Selon une autre caractéristique additionnelle du dispositif de plantoir selon l'invention, le corps comporte des lumières.

Selon une autre caractéristique additionnelle du dispositif selon l'invention la partie de chacun des éléments formant le corps, rattachée au mécanisme d'actionnement, consiste en une cornière.

Les avantages et les caractéristiques du dispositif de plantoir selon l'invention, ressortiront plus clairement de la description qui suit et qui se rapporte au dessin annexé, lequel en représente un mode de réalisation non limitatif.

Dans le dessin annexé :
- la figure 1 représente une vue schématique en élévation du dispositif de plantoir selon l'invention.
- la figure 2 représente une vue schématique en élévation du même dispositif de plantoir, dans une configuration différente.
- la figure 3 représente une vue schématique en coupe selon l'axe XX' de la figure 1.
- la figure 4 représente une vue schématique en coupe selon l'axe YY' de la figure 2.
- la figure 5 représente une vue schématique en perspective d'un mode de réalisation particulier du dispositif de plantoir selon l'invention.

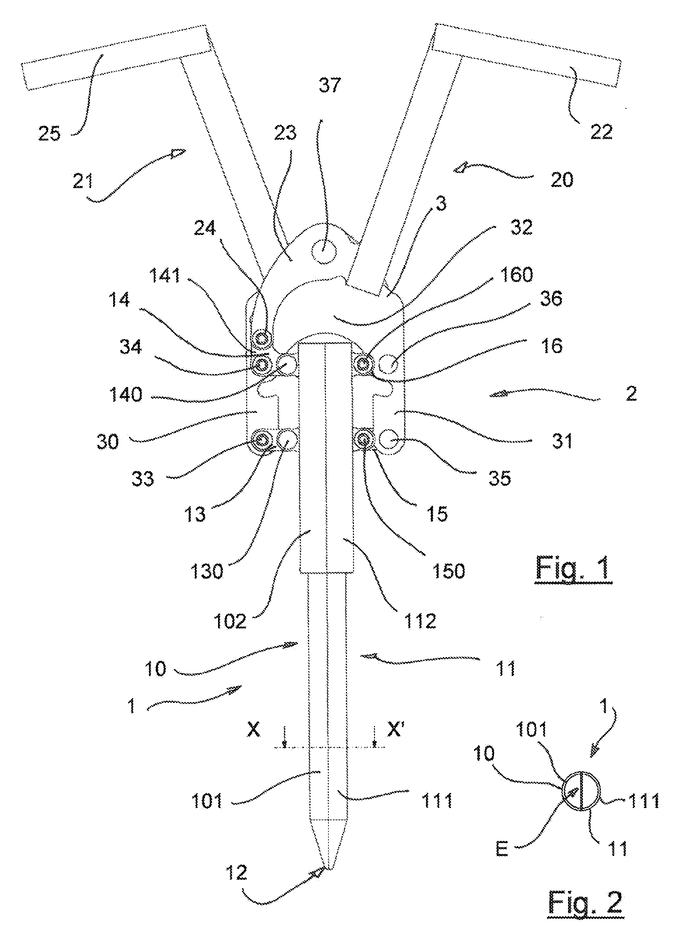

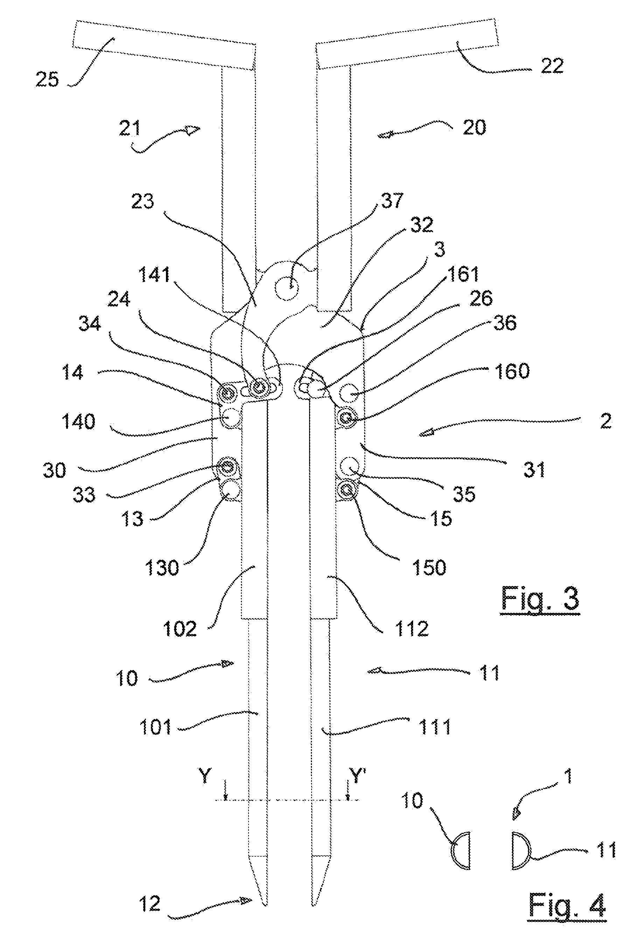

En référence aux figures 1 et 2, on peut voir qu'un dispositif de plantoir selon l'invention comporte un corps 1 constitué du rapprochement de deux éléments 10 et 11, de forme allongée et, au moins dans leur partie extrême libre, respectivement 101 et 111, de section transversale en U comme cela est visible sur les figures 3 et 4.

Une extrémité du corps 1 est conformée en une pointe 12, qui présente une forme conique, et qui ferme l'extrémité de la partie tubulaire du corps 1 formée par le rapprochement des parties 101 et 111, et délimite donc intérieurement à ce dernier, un espace E.

L'autre extrémité du corps 1, qui est constituée des parties 102 et 112 des éléments, respectivement 10 et 11, et qui peuvent consister en également en un profilé de section en U, ou bien d'une cornière, est solidaire d'un mécanisme d'actionnement 2, qui comprend un bâti 3 en forme de U comprenant deux branches 30 et 31 reliées par une partie transversale 32, l'élément 10 du corps 1 étant solidarisé à la branche 30, tandis que l'élément 11 est solidarisé à la branche 31.

L'élément 10 est relié à la branche 30, du côté intérieur de celle-ci, au travers de deux biellettes 13 et 14, en sorte de former un parallélogramme déformable. Ainsi la biellette 13 est montée pivotante d'une part à l'extrémité de la branche 30 sur un pivot 33, et d'autre part sur l'élément 10 sur un pivot 130, tandis que la biellette 14 est montée pivotante d'une part sur la branche 30 sur un pivot 34 disposé du côté de la partie transversale 32, et d'autre part sur l'élément sur un pivot 140.

De la même manière l'élément 11 est relié à la branche 31, du côté intérieur de celle-ci, au travers de deux biellettes 15 et 16, en sorte de former un parallélogramme déformable, la biellette 15 étant montée pivotante d'une part à l'extrémité de la branche 31 sur un pivot 35, et d'autre part sur l'élément 11 sur un pivot 150, tandis que la biellette 16 est montée pivotante d'une part sur la branche 31 sur un pivot 36 disposé du côté de la partie transversale 32, et d'autre part sur l'élément sur un pivot 160.

Le bâti 3 comporte au niveau de la partie transversale 32, un pivot 37 d'axe parallèle à ceux des pivots 33, 34, 35, 36, 130, 140, 150 et 160, sur lequel s'articulent en pivotement deux poignées 20 et 21, destinées à permettre de manoeuvrer les éléments 10 et 11.

Ainsi, la poignée 20 comporte d'une part une partie de préhension 22, et d'autre part, du côté opposé à la partie de préhension 22, au-delà du pivot 37, un levier 23 dont l'extrémité est reliée, au travers d'un pivot 24, à une extension 141 de la biellette 14, qui s'étend radialement à l'axe du pivot 34, en sorte que le pivotement de la poignée 20 sur le pivot 37, entraîne le pivotement de la biellette 14 sur le pivot 34.

La poignée 21 comporte de manière similaire une partie de préhension 25 et un levier, non visible, relié à une extension 161 de la biellette 16, visible sur la figure 2, qui s'étend radialement à l'axe du pivot 36, au travers d'un pivot 26.

Par l'actionnement des parties de préhension 22 et 25, en pivotement sur le pivot 37, en rapprochement ou en éloignement, on obtient, respectivement l'éloignement ou le rapprochement des éléments 10 et 11 du corps tubulaire 1.

Sur la figure 2, les parties de préhension 22 et 25 des poignées 20 et 21 sont rapprochées, ce qui correspond à un écartement des éléments 10 et 11, rendant accessible l'espace E, de manière à pouvoir y introduire un plant.

Sur la figure 1, les parties de préhension 22 et 25 des poignées 20 et 21 sont éloignées l'une de l'autre, ce qui correspond à un rapprochement des éléments 10 et 11, et donc à la formation du corps 1 et de son espace interne E permettant de contenir le plant.

Dans cette position, les poignées 20 et 21 constituent des éléments d'appui permettant de peser sur le dispositif de plantoir afin de faire pénétrer le corps tubulaire 1 dans le sol, sans risque d'ouverture inopinée de ce dernier.

Après introduction du corps tubulaire 1 dans le sol, celui-ci est retirer dans un mouvement vertical de traction accompagné d'un mouvement de rapprochement des poignées 20 et 21, avec pour conséquence l'écartement des éléments 10 et 11, lesquels libèrent le plant qui demeure dans la terre.

De manière avantageuse, le corps tubulaire 1 peut comporter des lumières, non représentées, disposées notamment dans les parties 102 et 112, lorsque celles-ci ne sont pas constituées de cornières, et destinées à permettre le passage d'un greffon du plant.

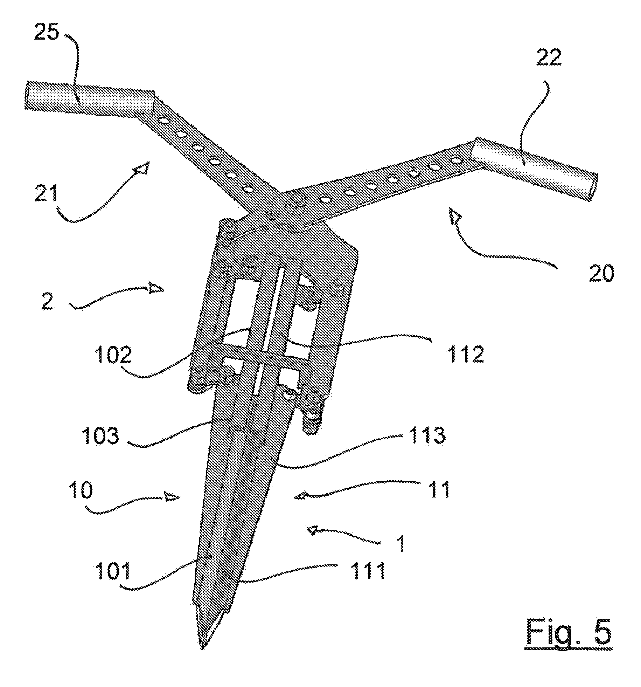

En référence maintenant à la figure 5, on peut voir une variante de réalisation du dispositif de plantoir selon l'invention, où les parties 102 et 112 sont constituées de cornières, et où chacune des parties 101 et 111 de l'élément 1 est garni longitudinalement d'un fer plat, respectivement 103 et 113, s'étendant dans un plant perpendiculaire aux axes de pivotement.

Le dispositif de plantoir selon l'invention, peut être associé à des moyens moteurs, électriques ou pneumatiques, notamment destinés à agir sur le rapprochement des poignées 20 et 21, et ainsi faciliter l'ouverture du corps tubulaire lorsqu'il est en terre.

## Revendications

1. Dispositif de plantoir comportant un corps (1) dont au moins une partie est tubulaire et est destinée à contenir le plant à planter, constitué du rapprochement de deux éléments allongés (10, 11) présentant, au niveau de la partie tubulaire, une section transversale en U ou en forme de cornière, et dont une extrémité (12), qui est également celle de la partie tubulaire, est fermée et conformée en une pointe, tandis que l'autre extrémité est portée par un mécanisme (2) d'actionnement des éléments (10, 11) en éloignement et en rapprochement l'un de l'autre, tandis que des poignées (20, 21) sont conçues aptes à permettre, d'une part, le maintien du dispositif afin d'enfoncer la partie tubulaire par sa pointe dans le sol, et d'autre part, de manoeuvrer le mécanisme (2) en ouverture pour permettre l'introduction du plant dans le corps tubulaire, ou pour libérer le plant dans la terre après enfouissement de la partie tubulaire, **caractérisé en ce que** le mécanisme d'actionnement comporte un bâti (3) en forme de U à chacune des branches (30, 31) duquel est solidarisée, du côté intérieur des branches (30, 31), un élément (10, 11) du corps (1) au travers d'une paire de bielles (13, 14, 15, 16), en sorte de former un parallélogramme déformable, les poignées (20, 21) étant articulées sur le bâti (3), tandis que chacune d'elles est reliée à une bielle (14, 16) de chacune des paires de bielles, de manière que l'actionnement des poignées (20, 21), agissent sur le parallélogramme déformable.

2. Dispositif de plantoir selon la revendication 1 ou la revendication 2, caractérisé en ce le mécanisme (2) d'actionnement est agencé en sorte que l'écartement des deux éléments (10, 11) constituant le corps (1) soit réalisé par un mouvement de rapprochement des poignées (20, 21), et inversement.

3. Dispositif de plantoir selon l'une quelconque des revendications précédentes, **caractérisé en ce que** la partie tubulaire du corps (1) est de section ronde, tandis que la pointe (12) est de forme conique.

4. Dispositif de plantoir selon l'une quelconque des revendications précédentes, **caractérisé en ce que** le mécanisme d'actionnement (2) est associé à un moyen moteur.

5. Dispositif de plantoir selon l'une quelconque des revendications précédentes, **caractérisé en ce que** le corps (1) comporte des lumières.

6. Dispositif de plantoir selon l'une quelconque des revendications 1 à 6, **caractérisé en ce que** la partie (102, 112) de chacun des éléments (10, 11) formant le corps (1), rattachée au mécanisme d'actionnement (2), consiste en une cornière.

## Patentansprüche

1. Pflanzervorrichtung, umfassend einen Körper (1), von dem zumindest ein Teil rohrförmig und dazu bestimmt ist, die zu pflanzende Pflanze zu enthalten, der aus der Annäherung zu einander von zwei länglichen Elementen (10, 11) besteht, der im Bereich des rohrförmigen Teils einen U- oder Winkelförmigen Querschnitt aufweist, und von dem ein Ende (12), das auch dasjenige des rohrförmigen Teils ist, geschlossen und spitzenformig geformt ist, während das andere Ende von einem Mechanismus (2) zur Betätigung der Elemente (10, 11) voneinander weg und aufeinander zu getragen ist, während Griffe (20, 21) geeignet vorgesehen sind, um einerseits das Halten der Vorrichtung, um den rohrförmigen Teil mit seiner Spitze in den Boden zu stecken, und andererseits den Mechanismus (2) in Öffnung zu betätigen, um die Einführung der Pflanze in den rohrförmigen Körper oder das Loslassen der Pflanze in den Boden nach dem Einstecken des rohrförmigen Teils zu erlauben, zu erlauben, **dadurch gekennzeichnet, dass** der Betätigungsmechanismus einen U-förmigen Rahmen (3) umfasst, mit jedem dessen Schenkel (30, 31) an der Innenseite der Schenkel (30, 31) ein Element (10, 11) des Körpers (1) über ein Paar von Verbindungsstangen (13, 14, 15, 16) fest verbunden ist, so dass ein verformbares Parallelogramm gebildet wird, wobei die Griffe (20, 21) am Rahmen (3) angelenkt sind, während jede dieser letzteren mit einer Verbindungsstange (14, 16) jedes der Paare von Verbindungsstangen verbunden ist, so dass die Betätigung der Griffe (20, 21) auf das verformbare Parallelogramm wirkt.

2. Pflanzervorrichtung nach Anspruch 1 oder Anspruch 2, **dadurch gekennzeichnet, dass** der Betätigungsmechanismus (2) so angeordnet ist, dass das Auseinanderrücken der beiden Elementen (10, 11), die den Körper (1) bilden, durch eine Annäherungsbewegung der Griffe (20, 21) erhalten wird, und umgekehrt.

3. Pflanzervorrichtung nach einem der vorhergehenden Ansprüche, **dadurch gekennzeichnet, dass** der rohrförmigen Teil des Körpers (1) im Querschnitt rund ist, während die Spitze (12) kegelförmig ist.

4. Pflanzervorrichtung nach einem der vorhergehenden Ansprüche, **dadurch gekennzeichnet, dass** der Betätigungsmechanismus (2) einem Motormittel zugeordnet ist.

5. Pflanzervorrichtung nach einem der vorhergehenden Ansprüche, **dadurch gekennzeichnet, dass** der Körper (1) Öffnungen umfasst.

6. Pflanzervorrichtung nach einem der Ansprüche 1 bis 6, **dadurch gekennzeichnet, dass** der Teil (102, 112) jedes der Elemente (10, 11), die den Körper (1) bilden, der an dem Betätigungsmechanismus (2) befestigt ist, aus einem Winkelprofil besteht.

## Claims

1. A planter device including a body (1), at least part of which is tubular and is aimed at containing the plant to be planted, formed by bringing together two elongated elements (10, 11) having, at the level of the tubular portion, a U-shaped or angle-shaped cross-section and one end (12) of which, that is also the one of the tubular portion, is closed and with a pointed shape, while the other end is carried by a mechanism (2) for actuating the elements (10, 11) away from and towards each other, while the handles (20, 21) are designed capable of permitting, on the one hand, to maintain the device so as to push the tubular portion by its tip into the ground and, on the other hand, to operate the mechanism (2) in opening to permit the insertion of the plant into the tubular body, or to release the plant in the ground after burial of the tubular portion, wherein the actuating mechanism includes a U-shaped frame (3) with each of the legs (30, 31) of which is made integral, on the inner side of the legs (30, 31), an element (10, 11) of the body (1) through a pair of connecting rods (13, 14, 15, 16), so as to form a deformable parallelogram, the handles (20, 21) being hinged on the frame (3), while each of them is connected to a connecting rod (14, 16) of each pair of connecting rods, so that the actuation of the handles (20, 21) acts on the deformable parallelogram.

2. The planter device according to claim 1 or claim 2, wherein the actuation mechanism (2) is so arranged that the separation from each other of the two elements (10, 11) forming the body (1) is obtained by a movement of bringing the handles (20, 21) close to each other, and viceversa.

3. The planter device according to any one of the preceding claims, wherein the tubular portion of the body (1) has a round cross-section, while the tip (12) has a conical shape.

4. The planter device according to any one of the preceding claims, wherein the actuation mechanism (2) is associated with a motor means.

5. The planter device according to any one of the preceding claims, wherein the body (1) includes apertures.

6. The planter device according to any one of claims 1 to 6, wherein the portion (102, 112) of each of the elements (10, 11) forming the body (1), attached to the actuation mechanism (2), consists of an angle iron.
